# EUROPEAN PATENT APPLICATION

(11) **EP 4 583 185 A1**
(43) Date of publication of application: **09.07.2025**
(21) Application number: 22957448.8
(22) Date of filing: 01.09.2022
(51) Int. Cl.: H01M 4/131, H01M 4/525, H01M 4/62

(54) **LITHIUM ION SECONDARY BATTERY POSITIVE ELECTRODE AND LITHIUM ION SECONDARY BATTERY**

(71) Applicant: Vehicle Energy Japan Inc., Ibaraki 312-8505 (JP)
(72) Inventor: INABA, Akira, Hitachinaka-shi, Ibaraki 312-8505 (JP); MIKI, Takeshi, Hitachinaka-shi, Ibaraki 312-8505 (JP)
(74) Representative: Strehl & Partner mbB
(86) International application number: PCT/JP2022/033039
(87) International publication number: WO 2024/047854

(57) **Abstract**

An object of the present invention is to provide a positive electrode capable of achieving both a high energy density and a long life of a lithium ion secondary battery. The positive electrode for the lithium ion secondary battery of the present invention includes a positive electrode current collector; and a positive electrode active material layer laminated on the positive electrode current collector, in which the positive electrode active material layer includes a positive electrode first active material layer laminated on the positive electrode current collector, and a positive electrode second active material layer laminated on the positive electrode first active material layer, the positive electrode first active material layer includes a positive electrode first active material containing a lithium-containing composite oxide containing Li and Ni as a main component, the positive electrode second active material layer includes a positive electrode second active material containing a lithium-containing composite oxide containing Li and Ni as a main component, and a molar fraction of Ni in the positive electrode second active material of the positive electrode second active material layer is smaller than the molar fraction of Ni in the positive electrode first active material of the positive electrode first active material layer.

## Description

### Technical Field

The present invention relates to a positive electrode for a lithium ion secondary battery and a lithium ion secondary battery including the positive electrode.

### Background Art

Conventionally, a lithium ion secondary battery having a positive electrode including a plurality of active material layers has been known (see, for example, Patent Literatures 1 and 2).

### Citation List

### Patent Literature

[Patent Literature 1] International Publication WO 2021/095818
[Patent Literature 2] International Publication WO 2020/179149

### Summary of Invention

### Technical Problem

Lithium ion secondary batteries in which a positive electrode including an active material layer developed for the purpose of improving an energy density of the lithium ion secondary batteries is introduced are required to have a long life.

### Solution to Problem

A positive electrode for a lithium ion secondary battery of the present invention includes a positive electrode current collector; and a positive electrode active material layer laminated on the positive electrode current collector, in which the positive electrode active material layer includes a positive electrode first active material layer laminated on the positive electrode current collector, and a positive electrode second active material layer laminated on the positive electrode first active material layer, the positive electrode first active material layer includes a positive electrode first active material containing a lithium-containing composite oxide containing Li and Ni as a main component, the positive electrode second active material layer includes a positive electrode second active material containing a lithium-containing composite oxide containing Li and Ni as a main component, and a molar fraction of Ni in the positive electrode second active material of the positive electrode second active material layer is smaller than the molar fraction of Ni in the positive electrode first active material of the positive electrode first active material layer.

A lithium ion secondary battery of the present invention is a lithium ion secondary battery including a positive electrode, a negative electrode, and an electrolyte, in which the positive electrode is a positive electrode for the lithium ion secondary battery of the present invention.

### Advantageous Effects of Invention

According to the lithium ion secondary battery including the positive electrode for the lithium ion secondary battery of the present invention, it is possible to achieve both a high energy density and a long life.

### Brief Description of Drawings

Figure 1 is a schematic perspective view showing a battery 1 including a positive electrode 110 of an example according to an embodiment.
Figure 2 is a schematic perspective view showing a charge/discharge body 100 of the battery 1 shown in Figure 1.
Figure 3 is a schematic perspective view showing a portion including a positive electrode tab 111b and a negative electrode tab 121b in the charge/discharge body 100 shown in Figure 2, with side ends of a positive electrode 110, a negative electrode 120 and a separators 130 at different positions.
Figure 4 is a schematic side view showing a charge/discharge body 100 shown in Figure 3.
Figure 5 is a schematic enlarged view of a portion of a die head and a back roller used in a production of the positive electrode.
Figure 6 is a schematic cross-sectional view of a positive electrode and negative electrode of a separatorless battery including a positive electrode of another example according to the embodiment.
Figure 7 is a schematic enlarged cross-sectional view of an interface and the vicinity thereof between a positive electrode second active material layer and a positive electrode electronic insulation layer of a positive electrode active material layer of another example of the positive electrode according to the embodiment.

### Description of Embodiments

Each embodiment of the present invention will be described with reference to the drawings. To facilitate understanding of each embodiment, the size and ratio of components may be exaggerated in each drawing. In the drawings, the same reference numerals are given to the same components. In the drawings, a lateral width direction X (X-axis direction), a depth direction Y (Y-axis direction), and a height direction Z (Z-axis direction) of the constituent members of the battery 1 and the battery 1 are indicated by arrows. In each of the drawings, the lateral width direction X, the depth direction Y, and the height direction Z indicate relative direction relationships. That is, for example, in a case where the battery 1 is rotated by 180 degrees and the upper surface and the lower surface are reversely rotated, or in a case where the battery 1 is rotated by 90 degrees and the upper surface is arranged as a side surface, the lateral width direction X, the depth direction Y, and the height direction Z of the battery 1 change.

Hereinafter, the "positive electrode for a lithium ion secondary battery" may be abbreviated as "positive electrode". The term "lithium ion secondary battery" is sometimes abbreviated as "battery".

### (Configuration of Battery Including Positive Electrode of Example According to Embodiment)

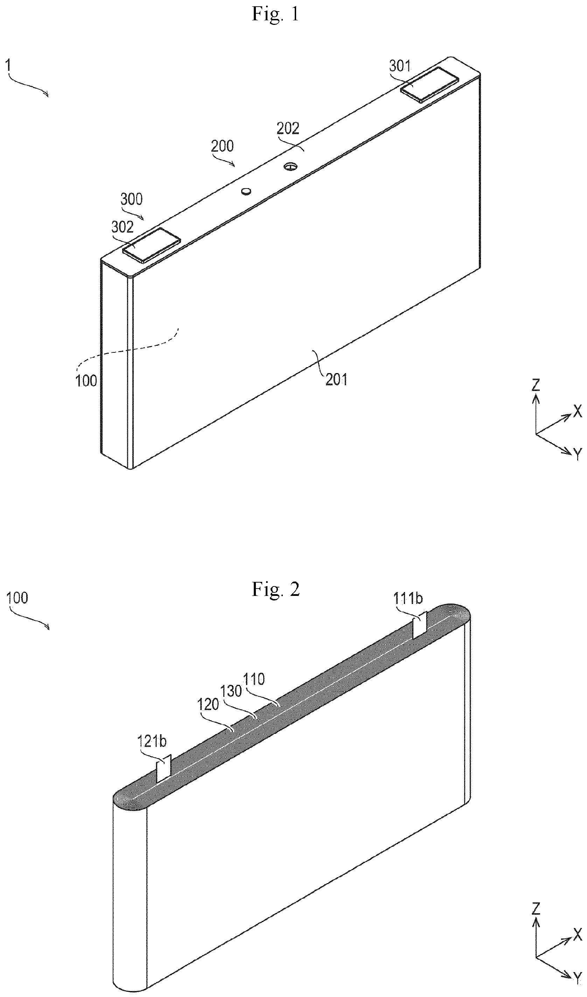

A configuration of a battery including a positive electrode of an example according to the embodiment will be described with reference to Figure 1 to Figure 4.

The battery 1 including the positive electrode 110 of an example according to the embodiment is a lithium ion secondary battery, and includes a charge/discharge body 100 in which electric power is charged and discharged, a container 200 which contains the charge/discharge body 100, and an external terminal 300 connected to the charge/discharge body 100 and attached to the container 200, as shown in Figure 1.

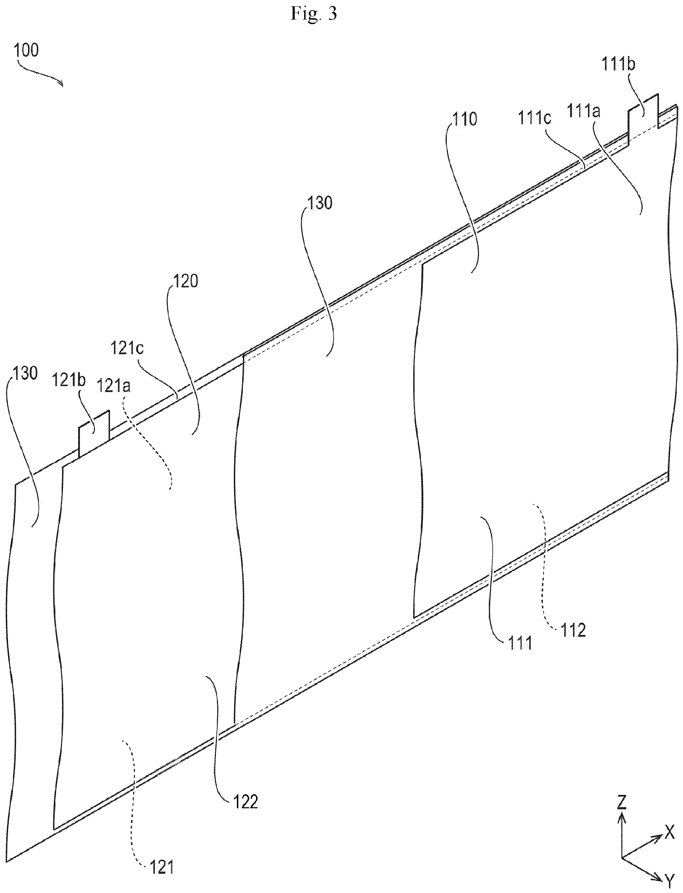

As illustrated in Figures 2 to 4, the charge/discharge body 100 includes a positive electrode 110, a negative electrode 120, and a separator 130. The charge/discharge body 100 impregnates the separator 130 with an electrolyte solution in which a support salt (electrolyte) is dissolved in a state of being contained in the container 200. As shown in Figures 2 and 3, the charge/discharge body 100 is configured by winding a positive electrode 110 formed in an elongated shape and a negative electrode 120 formed in an elongated shape through a separator 130 formed in an elongated shape. The charge/discharge body 100 is formed in a rectangular parallelepiped shape in which both end portions are rounded in a state in which the constituent members are wound.

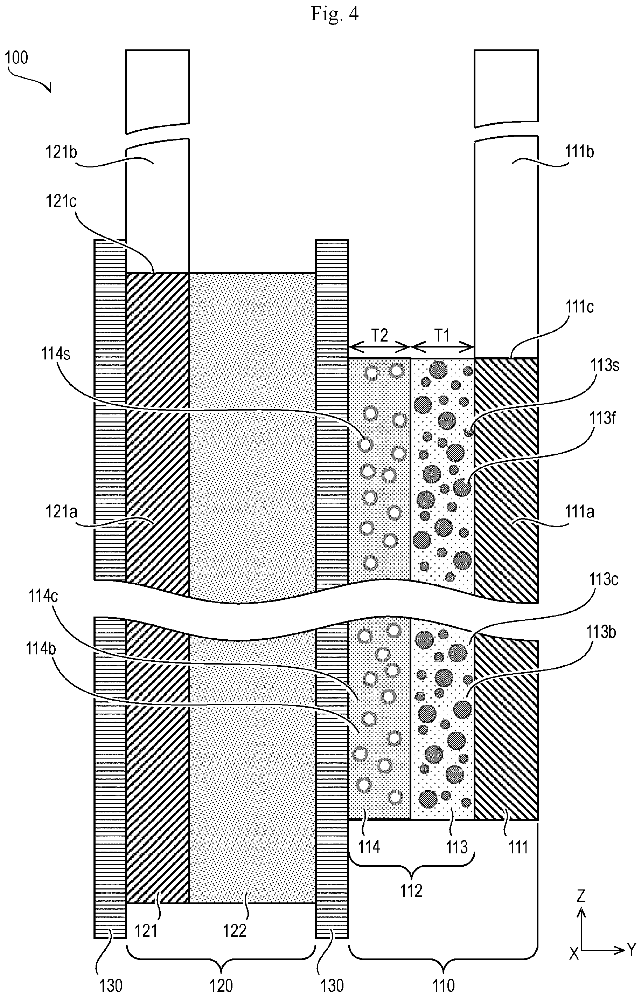

The positive electrode 110 is a positive electrode for a lithium ion secondary battery, and includes a positive electrode current collector 111 and a positive electrode active material layer 112 laminated on the positive electrode current collector 111, as shown in Figures 3 and 4. The positive electrode active material layer 112 includes a positive electrode first active material layer 113 laminated on the positive electrode current collector 111 and a positive electrode second active material layer 114 laminated on the positive electrode first active material layer 113. That is, the positive electrode 110 includes a plurality of active material layers.

The positive electrode current collector 111 is formed in an elongated shape extending in the lateral width direction X. As illustrated in Figures 3 and 4, the positive electrode current collector 111 includes a current collector 111a and a positive electrode tab 111b. The current collector 111a is long in the lateral width direction X and is formed in a foil shape. As shown in Figures 3 and 4, the positive electrode tab 111b protrudes from a side edge 111c along a longer direction of the current collector 111a to a shorter direction (above the height direction Z) of the current collector 111a. The positive electrode tab 111b is formed integrally with the current collector 111a. For example, one positive electrode tab 111b is formed on the current collector 111a. The current collector 111a is formed of, for example, aluminum or an aluminum alloy, for example, an aluminum foil having a plate-like (sheet-like) shape.

As shown in Figure 4, the positive electrode first active material layer 113 is bonded to the current collector 111a of the positive electrode current collector 111. The positive electrode first active material layer 113 may be formed on both surfaces of the current collector 111a. For example, the positive electrode first active material layer 113 faces all regions along the shorter direction (height direction Z) of the current collector 111a. As shown in Figure 4, the positive electrode second active material layer 114 is bonded to the positive electrode first active material layer 113.

The positive electrode first active material layer 113 includes solid particles 113f having a large particle diameter and solid particles 113s having a small particle diameter as the positive electrode first active material, the solid particles 113s having a median diameter (average particle diameter) smaller than the solid particles 113f having the large particle diameter. The positive electrode first active material layer 113 generally corresponds to a positive electrode active material layer used in an electric vehicle (BEV: Battery Electric Vehicle).

The solid particles 113f having the large particle diameter is, for example, solid particles having a particle diameter of 8 µm or more and 20 µm or less. The solid particles 113s having the small particle diameter are, for example, solid particles having the particle diameter of 2 µm or more and 6 µm or less.

A bulk density of the solid particles 113f having the large particle diameter is, for example, 2.5 g/cm³ or more and 3.5 g/cm³ or less. The bulk density of the solid particles 113s having the small particle diameter are, for example, 1.4 g/cm³ or more and 2.4 g/cm³ or less. Here, the bulk density of the solid particles refers to a density when a powder of the solid particles is filled in a container having a constant volume and the internal volume thereof is taken as the volume.

The solid particles 113f having the large particle diameter and the solid particles 113s having the small particle diameter have the same composition, and is a ternary lithium-containing composite oxide represented by the following general composition formula:

Li_{1+X}M^{A}O₂ (1)

(wherein X satisfies -0.15 ≤ X ≤ 0.15, and M^{A} represents an element group containing at least one element selected from the group consisting of Mn and Al, Ni, and Co.) In addition, the solid particles 113s having the small particle diameter are preferably single crystal. This is because the single crystal solid particles 113s contributes to a long life of the battery 1.

The positive electrode first active material layers 113 further include, for example, a conductive auxiliary agent 113c, a binder 113b etc. in addition to the positive electrode first active material. Among the materials of the conductive auxiliary agent 113c of the positive electrode first active material layers 113, carbon nanotubes are preferable. This is because the electronic conductivity of the positive electrode first active material layer 113 can be improved. In addition, since a diffusion path of lithium ions can be sufficiently secured, an energy density can be improved in addition to a cycle durability, a storage durability of lithium ions, and the charge rate characteristics in the case where the battery 1 repeats charging and discharging. This is because the content of the positive electrode first active material can be increased instead of reducing the content of the conductive auxiliary agent in the positive electrode first active material layer 113.

A ratio of a weight of the positive electrode first active material (the total weight of the solid particles 113f having the large particle diameter and the solid particles 113s having the small particle diameter) to the total weight of the positive electrode first active material layer 113 is preferably, for example, 94 wt% or more and 99 wt% or less. The ratio of the weight of the solid particulate 113f having the large particle diameter to the weight of the positive electrode active first material is preferably, for example, 60 wt% or more and 90 wt% or less in the positive electrode first active material layer 113.

The positive electrode second active material layer 114 includes a hollow particles 114s (positive electrode second active material) as a positive electrode second active material. The positive electrode second active material layer 114 generally corresponds to a positive electrode active material layer used in a hybrid vehicle (HEV: Hybrid Electric Vehicle).

The hollow particles 114s are, for example, hollow particles having a particle diameter of 3 µm or more and 7 µm or less. The bulk density of the hollow particles 114s are, for example, 1.2 g/cm³ or more and 2.0 g/cm³ or less. Here, the bulk density of the hollow particles refers to a density when a powder of the hollow particles is filled in a container having a constant volume and the internal volume thereof is taken as a volume.

The hollow particles 114s (positive electrode second active material) are a ternary lithium-containing composite oxide represented by the following general composition formula:

Li_{1+P}M^{B}O₂ (2)

(wherein P satisfies -0.15 ≤ P ≤ 0.15, and M^{B} represents an element group containing at least one element selected from the group consisting of Mn and Al, Ni, and Co.)

The positive electrode second active material layer 114 further include a conductive auxiliary agent 114c and a binder 114b in addition to the positive electrode second active material.

The ratio of the weight of the positive electrode second active material to the total weight of the positive electrode second active material layer 114 is preferably, for example, 85 wt% or more and 96 wt% or less.

In the positive electrode active material layer 112, a molar fraction of Ni in the hollow particle 114s (positive electrode second active material) of the positive electrode second active material layer 114 is smaller than the molar fraction of Ni in the solid particles 113f (positive electrode first active material) having the large particle diameter of the positive electrode first active material layer 113.

In the positive electrode active material layer 112, the median diameter (average particle diameter) of the positive electrode second active material (hollow particle 114s) of the positive electrode second active material layer 114 is smaller than the median diameter (average particle diameter) of the positive electrode first active material (particles including both a solid particles 113f having the large particle diameter and a solid particles 113f having the large particle diameter) of the positive electrode first active material layer 113.

The median diameter (average particle diameter) of the positive electrode first active material (particles including both the solid particles 113f having the large particle diameter and the solid particles 113f having the large particle diameter) of the positive electrode first active material layer 113 is, for example, 5.6 µm or more and 18.6 µm or less. The median diameter (average particle diameter) of the positive electrode second active material (hollow particles 114s) of the positive electrode second active material layer 114 is, for example, 3.0 µm or more and 8.0 µm or less.

The negative electrode 120 is a negative electrode for a lithium ion secondary battery, and includes a negative electrode current collector 121 and a negative electrode active material layer 122 laminated on the negative electrode current collector 121, as shown in Figures 3 and 4.

The negative electrode current collector 121 is formed in an elongated shape extending in the lateral width direction X. As illustrated in Figures 3 and 4, the negative electrode current collector 121 includes a current collector 121a and a negative electrode tab 121b. The current collector 121a is long in the lateral width direction X and is formed in a foil shape. As shown in Figure 4, the current collector 121a of the negative electrode 120 has a longer width along the shorter direction (height direction Z) than the current collector 111a of the positive electrode 110. Both ends (from the upper end to the lower end in the height direction Z) of the negative electrode 120 along the shorter direction of the current collector 121a are positioned along the shorter direction of the current collector 111a of the positive electrode 110 via the separators 130. As shown in Figures 3 and 4, the negative electrode tab 121b protrudes from a side edge 121c along the longer direction of the current collector 121a to the shorter direction (above the height direction Z) of the current collector 121a. The negative electrode tab 121b protrudes in the same direction (upward in the height direction Z) as the positive electrode tab 111b of the positive electrode 110 while being laminated with the positive electrode 110 via the separators 130. The negative electrode tab 121b is spaced apart from the positive electrode tab 111b of the positive electrode 110 in the lateral width direction X while being laminated with the positive electrode 110 via the separators 130. The negative electrode tab 121b is formed integrally with the current collector 121a. For example, one negative electrode tab 121b is formed on the current collector 121a. The current collector 121a is formed of, for example, copper or a copper alloy.

As shown in Figure 4, the negative electrode active material layer 122 are bonded to the current collector 121a of the negative electrode current collector 121. The negative electrode active material layer 122 may be formed on both surfaces of the current collector 121a. For example, the negative electrode active material layer 122 faces the entire area along the shorter direction (height direction Z) of the current collector 121a.

The negative electrode active material layer 122 includes a negative electrode active material. Examples of the negative electrode active material include carbon materials such as a natural graphite, an artificial graphite, a hardly graphitizable carbon (a hard carbon), and an easily graphitizable carbon (a soft carbon), and a graphite coated with an amorphous carbon.

The negative electrode active material layer 122 further includes, for example, a conductive auxiliary agent, a binder etc. in addition to the negative electrode active material. As a material of the conductive auxiliary agent of the negative electrode active material layer 122, for example, the same material as the material of the conductive auxiliary agent 113c of the positive electrode first active material layer 113 is used. As the material of the binder of the negative electrode active material layer 122, for example, the same material as the material of the binder 113b of the positive electrode first active material layer 113 is used.

As shown in Figures 3 and 4, the separator 130 has an insulating function of insulating between the positive electrode 110 and the negative electrode 120 and preventing a short circuit between the positive electrode 110 and the negative electrode 120, and a function of holding a nonaqueous electrolyte. The separator 130 allows lithium ions to pass through the electrolyte solution. The separator 130 is formed in an elongated shape. As shown in Figure 4, the separators 130 are longer in width along the shorter direction (height direction Z) than the current collector 111a of the positive electrode 110 and the current collector 121a of the negative electrode 120. Both ends (from upper end to lower end in the height direction Z) of the positive electrode 110 along the shorter direction of the current collector 111a are located within a range (from upper end to lower end in the height direction Z) along the shorter direction of the separators 130, and both ends (from upper end to lower end in the height direction Z) along the shorter direction of the current collector 121a of the negative electrode 120 are located. The separator 130 is made of a porous material. As the separator 130, a porous sheet made of a resin such as polyethylene (PE: PolyEthylene), polypropylene (PP: PolyPropylene), polyester, cellulose, or polyamide, or a laminated sheet thereof (for example, a sheet having a three-layer structure of PP/PE/PP) is used.

One or both surfaces of the separator 130 may be provided with a layer including an inorganic material (e.g., alumina particles etc.) and a binder. Thus, even when the battery 1 is used in an abnormal state (for example, when the temperature of the lithium ion secondary battery rises to 160 °C or higher due to overcharge, crushing, etc.), the separator 130 is prevented from melting and the insulating function can be maintained. Therefore, the safety of the battery 1 is improved.

The electrolytic solution is impregnated into the separator 130 and is in contact with the positive electrode 110 and the negative electrode 120. The electrolyte solution includes an organic solvent and a support salt (electrolyte), and may further include an additive. As the organic solvent, for example, a carbonate ester or the like is used. As the support salt, for example, a lithium salt is used. As the additive, for example, vinylene carbonate, fluoroethylene carbonate etc. is used.

As shown in Figure 1, the container 200 contains a charge/discharge body 100. The container 200 includes a case 201 and a lid 202. The lid 202 is joined to the opening of the case 201, and seals the charge/discharge body 100 together with the case 201. The charge/discharge body 100 sealed by the case 201 and the lid 202 is filled with an electrolyte.

As illustrated in Figure 1, the external terminal 300 includes a positive electrode terminal 301 and a negative electrode terminal 302. The positive electrode terminal 301 and the negative electrode terminal 302 relay input and output of electric power between the charge/discharge body 100 and an external device. In addition, in a case where a battery pack is configured by using a plurality of batteries 1, the other negative electrode terminal 302 adjacent to one of the adjacent positive electrode terminals 301 is joined via a bus bar. The positive electrode terminal 301 is indirectly or directly bonded to the positive electrode tab 111b via a positive electrode current collector plate. The negative electrode terminal 302 is indirectly or directly bonded to the negative electrode tab 121b via a negative electrode current collector plate. The positive electrode terminal 301 and the negative electrode terminal 302 are attached to the lid 202.

### (Manufacturing Method of Battery Including Positive Electrode of Example According to Embodiment)

The battery including the positive electrode of an example according to the embodiment can be manufactured by using a technique known in the technical field of the present invention except for the method of manufacturing the positive electrode.

The positive electrode 110 of the example according to the embodiment can be manufactured, for example, as follows. First, materials (for example, a positive electrode active material, a conductive auxiliary agent, a binder etc.) included in the positive electrode first active material layer 113 is prepared. The materials may be in powder form. These mixtures are then mixed and the resulting mixture is dispersed in a solvent (e.g., N-methyl-2-pyrrolidone (NMP) and/or water) to obtain a positive electrode first slurry. Next, the positive electrode first slurry is applied to the surface (one side or both sides) of the positive electrode current collector 111 by a known technique, dried, and subjected to calendering treatment as necessary to form the positive electrode first active material layer 113.

Subsequently, materials (for example, a positive electrode active material, a conductive auxiliary agent, a binder etc.) included in the positive electrode second active material layer 114 is prepared. The materials may be in powder form. These materials are then mixed and the resulting mixture is dispersed in a solvent (e.g., N-methyl-2-pyrrolidone (NMP) and/or water) to obtain a positive electrode second slurry. Next, the positive electrode second slurry is applied to the surface (one side or both sides) of the positive electrode first active material layer 113 by a known technique, dried, and subjected to calendering treatment if necessary to form the positive electrode second active material layer 114. The positive electrode 110 is obtained by the above-described manufacturing method. However, the positive electrode 110 is not limited to the one manufactured by the above manufacturing method, and may be manufactured by another method.

### (Effect of Battery Including Example Positive Electrode According to Embodiment)

An effect of the battery including the positive electrode of an example according to embodiment will be described with reference to Figure 4.

In the positive electrode 110 according to the embodiment, the positive electrode active material layer 112 includes a positive electrode first active material layer 113 laminated on the positive electrode current collector 111 and a positive electrode second active material layer 114 laminated on the positive electrode first active material layer 113. By disposing the positive electrode second active material layer 114 having the smaller molar fraction of Ni than the positive electrode first active material layer 113 on the separator 130 side of the positive electrode active material layer 112, degradation of the active material layer due to the formation of an inert layer including nickel oxide (NiO) or the like can be suppressed, so that the durability of the battery 1 can be improved and the life of the battery 1 can be prolonged. On the other hand, since the positive electrode second active material layer 114 having the larger molar fraction of Ni is disposed on the positive electrode current collector 111 of the positive electrode active material layer 112, the energy density of the battery 1 can be sufficiently secured. Therefore, in the battery 1 including the positive electrode 110 of the example according to the embodiment, it is possible to achieve both high energy density and long life.

Next, the configuration of the positive electrode for the lithium ion secondary battery and the lithium ion secondary battery including the positive electrode according to the embodiment will be described in more detail.

### 1. Positive Electrode for Lithium Ion Secondary Battery

The positive electrode for a lithium ion secondary battery according to the embodiment includes a positive electrode current collector and a positive electrode active material layer laminated on the positive electrode current collector, and the positive electrode active material layer includes a positive electrode first active material layer laminated on the positive electrode current collector and a positive electrode second active material layer laminated on the positive electrode first active material layer.

### (1) Positive Electrode First Active Material Layer

The positive electrode first active material layer includes a positive electrode first active material. The positive electrode first active material is composed of a lithium-containing composite oxide including Li and Ni. The lithium-containing composite oxide constituting the positive electrode first active material is not particularly limited as long as it contains Li and Ni, but is preferably one containing Co in addition to Li and Ni, and is more preferably one containing at least one selected from the group consisting of Mn and Al in addition to Li, Ni and Co, and is particularly preferably a ternary lithium-containing composite oxide represented by the following general composition formula (1):

Li₁₊ₓM^{A}O₂ (1)

(wherein X satisfies -0.15 ≤ X ≤ 0.15, and M^{A} represents an element group containing at least one selected from the group consisting of Mn and Al, Ni, and Co.) Herein, the value of X in the composition formula (1) is obtained by an ICP spectrometry.

The ternary lithium-containing composite oxide represented by the general composition formula (1) has a high thermal stability and stability in a high potential state, and by applying this oxide, the safety of the battery 1 and various battery characteristics can be enhanced. All or a part of the positive electrode first active material may be a single crystal. The lifetime characteristics of the positive electrode first active material can be improved by the single crystal positive electrode first active material having a high purity and a high uniformity. Also, it is possible to improve a cycle durability and a storage durability of lithium ions when the battery 1 repeats charging and discharging.

The positive electrode first active material layer is not particularly limited as long as it contains the positive electrode first active material, but it is preferable that all or a part of the positive electrode first active material is formed in a solid state. Compared to the positive electrode first active material formed in a hollow shape, the solid positive electrode first active material has excellent charging characteristics. Therefore, the energy density of the lithium ion secondary battery can be improved. As the positive electrode first active material layer, as an example according to the embodiment, the positive electrode first active material preferably includes solid particles having a large particle diameter and solid particles having a small particle diameter (for example, median diameter (D50)) smaller than that of the solid particles having the large particle diameter. This is because a packing density of the positive electrode active material in the positive electrode first active material layer can be improved and the energy density of the battery can be increased.

When the positive electrode first active material layer contains hollow particles as the positive electrode first active material, the positive electrode first active material preferably contains more solid particles than hollow particles.

The positive electrode first active material layer preferably includes particles having an average particle diameter smaller than the particles having the average particle diameter larger in addition to particles having the large average particle diameter, as the positive electrode first active material. It is preferable that the particles having the small average particle diameter in the positive electrode first active material have a particle diameter sufficiently smaller than 1/2 of the particles having the large average particle diameter in the positive electrode first active material. It can be filled at high density, and can contribute to obtain a high battery performance.

It is preferable that the particles having the small average particle diameter in the positive electrode first active material have an average particle diameter larger than the particles having the small average particle diameter in the positive electrode second active material described later. This is because a highly filled electrode can be formed even if there is a variation in the shape of the particles having the large average particle diameter in the positive electrode first active material.

It is preferable that the particles having the small average particle diameter in the positive electrode first active material have substantially the same average particle diameter as the particles having the small average particle diameter in the positive electrode second active material described later. It is preferable to manage the raw materials and manufacturing. Particles having the same specifications can be used for particles having the small average particle diameter of the positive electrode second active material and particles having the small average particle diameter of the positive electrode first active material described later. In addition, the term "substantially the same" may be defined as a difference in average particle diameter within 10 %. This is because the variation in the particle diameter is taken into consideration.

The particles having the small average particle diameter in the positive electrode first active material are preferably smaller than the particles having the small average particle diameter in the positive electrode second active material described later. Since it can be arranged in a gap of various large particles, a high energy density battery can be provided.

The positive electrode first active material layer is not particularly limited as long as it contains a positive electrode first active material, but, for example, it further contains at least one additive selected from the group consisting of a conductive auxiliary agent, a binder etc. in addition to the positive electrode first active material, and among them, it is preferable that it further contains the conductive auxiliary agent, and in particular, it is preferable that it further contains the conductive auxiliary agent and the binder.

A carbon-based material can be used as a material of the conductive auxiliary agent of the positive electrode first active material layer. As the carbon-based material, a crystalline carbon, an amorphous carbon, or a mixture thereof can be used. Examples of the crystalline carbon include a natural graphite (e.g., a scaly graphite), an artificial graphite, carbon fibers, or mixtures thereof. Examples of the amorphous carbon include carbon black (e.g., acetylene black, Ketjen black, channel black, furnace black, lamp black, thermal black, or mixtures thereof). Examples of the carbon fibers include carbon nanotubes.

As the binder of the positive electrode first active material layer, for example, polyvinylidene fluoride (PVdF), polytetrafluoroethylene (PTFE), polyethylene, polystyrene, polybutadiene, polyacrylonitrile, polyvinyl fluoride, polypropylene fluoride, polychloroprene fluoride, butyl rubber, nitrile rubber, styrene butadiene rubber (SBR), polysulfide rubber, nitrocellulose, cyanoethyl cellulose, various latexes, acrylic resins, or mixtures thereof can be used.

The ratio of the weight of the positive electrode first active material to the total weight of the positive electrode first active material layer is preferably, for example, 94 wt% or more and 99 wt% or less.

The thickness (for example, the first thickness T1 in Figure 4) of the positive electrode first active material layer on one side in the laminating direction (for example, the depth direction Y in Figure 4) may be, for example, 5 µm or more and 500 µm or less in average thickness, or may be, for example, 10 µm or more and 300 µm or less in average thickness.

### (2) Positive Electrode Second Active Material Layer

The positive electrode second active material layer includes a positive electrode second active material. The positive electrode second active material is composed of a lithium-containing composite oxide including Li and Ni. The lithium-containing composite oxide constituting the positive electrode second active material is not particularly limited as long as it contains Li and Ni, but is preferably one containing Co in addition to Li and Ni, and is more preferably one containing at least one selected from the group consisting of Mn and Al in addition to Li, Ni and Co, and is particularly preferably a ternary lithium-containing composite oxide represented by the following general composition formula (2):

Li_{1+P}M^{B}O₂ (2)

(wherein P satisfies -0.15 ≤ P ≤ 0.15, and M^{B} represents an element group containing at least one selected from the group consisting of Mn and Al, Ni, and Co.) Herein, the value of P in the composition formula (2) is obtained by the ICP spectrometry.

As the positive electrode second active material, it is preferable that all or a part of the positive electrode second active material is formed in a hollow shape as in the example according to the embodiment. This is because the electrolyte (electrolyte solution) impregnates a void of the hollow particles of the positive electrode second active material in the positive electrode second active material layer, compared to the positive electrode second active material formed in the solid state, thereby improving a diffusion rate of lithium ions and reducing a resistance of the positive electrode active material layer. This is because the charging characteristics of the lithium ion secondary battery, particularly, the rapid charging characteristics can be improved. This is because a cycle durability and a storage durability of lithium ions can be improved when the lithium ion secondary battery is repeatedly charged and discharged. This is because a battery with a high ion conductivity and a high capacity and a high output can be obtained.

When the positive electrode second active material layer contains solid particles as the positive electrode second active material, the positive electrode second active material preferably has more hollow particles than the solid particles.

The positive electrode second active material layer is not particularly limited as long as it contains a positive electrode second active material, but it further contains, for example, at least one additive selected from the group consisting of a conductive auxiliary agent, a binder etc. in addition to the positive electrode second active material, and among them, it is preferable that it further contains the conductive auxiliary agent, and in particular, it is preferable that it further contains the conductive auxiliary agent and the binder. The material of the conductive auxiliary agent of the positive electrode second active material layer is the same as the material of the conductive auxiliary agent of the positive electrode first active material layer, and thus description thereof will be omitted. Since the material of the binder of the positive electrode second active material layer is the same as the material of the binder of the positive electrode first active material layer, the description thereof will be omitted.

The ratio of the weight of the positive electrode second active material to the total weight of the positive electrode second active material layer is preferably, for example, 85 wt% or more and 96 wt% or less.

### (3) Positive Electrode Active Material Layer

In the positive electrode active material layer, the molar fraction of Ni in the positive electrode second active material of the positive electrode second active material layer is smaller than the molar fraction of Ni in the positive electrode first active material of the positive electrode first active material layer. That is, (the molar fraction of Ni in the positive electrode first active material) > (the molar fraction of Ni in the positive electrode second active material) is satisfied. Specifically, for example, in the case of the positive electrode first active material is composed of a lithium-containing composite oxide represented by the general composition formula (1) and the positive electrode second active material is composed of a lithium-containing composite oxide represented by the general composition formula (2), when the molar fraction of Ni, the molar fraction of Co, and the molar fraction of at least one element selected from the group consisting of Mn and Al in all elements constituting the element group represented by M^{A} in the general composition formula (1) are Y (0 < Y < 1), Z (0 < Z < 1), and 1-Y-Z, respectively, and the molar fraction of Ni, the molar fraction of Co, and the molar fraction of at least one element selected from the group consisting of Mn and Al in all elements constituting the element group represented by M^{B} in the general composition formula (2) are Q (0 < Q < 1), R (0 < R < 1), and 1-Q-R, respectively, Y > Q is satisfied. Thereby, degradation of the active material layer can be suppressed due to the formation of an inert layer including nickel oxide (NiO) or the like by disposing the positive electrode second active material layer having a smaller molar fraction of Ni than that of the positive electrode first active material layer on the separator side of the positive electrode active material layer, so that the durability of the battery can be improved and the life of the battery can be extended. In addition, nickel oxide is inert in the lithium ion secondary battery and does not contribute to the battery reaction. Here, since the positive electrode first active material layer receives lithium ions through the positive electrode second active material layer, the positive electrode first active material layer has relatively less contact with the electrolyte than the positive electrode second active material layer. That is, the positive electrode first active material layer which is a high capacity layer generates less nickel oxide and grows less nickel oxide than the positive electrode second active material layer. Therefore, it is possible to improve the cycle durability and the storage durability of lithium ions when the lithium ion secondary battery is repeatedly charged and discharged. The values of Y and Z and the values of Q and R are obtained by the ICP spectrometry.

The positive electrode active material layers are not particularly limited as long as (the molar fraction of Ni in the positive electrode first active material) > (the molar fraction of Ni in the positive electrode second active material) is satisfied, but it is preferable, for example, that 50 ≤ (the molar fraction of Ni in the positive electrode first active material) ≤ 96 and 25 ≤ (the molar fraction of Ni in the positive electrode second active material) < 50 is satisfied. When the molar fraction of Ni in the positive electrode first active material is equal to or higher than the lower limit of these ranges and the molar fraction of Ni in the positive electrode second active material is equal to or lower than the upper limit of these ranges, the energy density of the battery can be sufficiently improved, and deterioration of the active material layer due to formation etc. of an inert layer including nickel oxide (NiO) on the separator side of the positive electrode active material layer can be effectively suppressed, and the durability of the battery can be effectively improved.

As the positive electrode active material layer, it is preferable that the lithium-containing composite oxide constituting the positive electrode first active material of the positive electrode first active material layer further contains Co, the lithium-containing composite oxide constituting the positive electrode second active material of the positive electrode second active material layer further contains Co, and the molar fraction of Co in the positive electrode second active material is larger than the molar fraction of Co in the positive electrode first active material. That is, (the molar fraction of Co in the positive electrode first active material) < (the molar fraction of Co in the positive electrode second active material) is preferably satisfied. This is because the lithium ions can be easily diffused by disposing the positive electrode second active material layer having a higher molar fraction of Co than the positive electrode first active material layer on the separator side of the positive electrode active material layer, and in particular, the resistance of the positive electrode active material layer at a low temperature can be reduced, so that a low-temperature power of the battery 1 can be improved. Further, the positive electrode active material layer can suppress heat generation in accordance with suppression of an increase in the resistance.

The positive electrode active material layer preferably satisfies (the molar fraction of Co in the positive electrode first active material) < (the molar fraction of Co in the positive electrode second active material), and among them, for example, 0 ≤ (the molar fraction of Co in the positive electrode first active material) ≤ 25 and 25 < (the molar fraction of Co in the positive electrode second active material) ≤ 40 are preferable. This is because the resistance of the positive electrode active material layers at low temperatures can be more effectively reduced when the molar fraction of Co in the positive electrode second active material is equal to or higher than the lower limit of these ranges.

The positive electrode active material layer preferably has an average particle diameter of the positive electrode second active material of the positive electrode second active material layer smaller than the average particle diameter of the positive electrode first active material of the positive electrode first active material layer. Specifically, for example, when the average particle diameter of the positive electrode first active material of the positive electrode first active material layer is set to Mf [µm] measured as the median diameter (D50) and the average particle diameter of the positive electrode second active material of the positive electrode second active material layer is set to Ms [µm] measured as the median diameter (D50), it is preferable to satisfy Mf > Ms. This is because the diffusion path of lithium ions in the thickness direction of the positive electrode active material layer can be shortened by disposing the positive electrode second active material layer containing an active material having a small average particle diameter on the separator side of the positive electrode active material layer, and the resistance of the positive electrode active material layer can be reduced. Specifically, a reaction area of the positive electrode active material per unit volume in the positive electrode active material layer is relatively larger in the positive electrode second active material layer as the high input/output layer than in the positive electrode first active material layer as the high capacity layer. Moreover, compared to the positive electrode first active material layer which is the high capacity layer, the positive electrode second active material layer which is the high input/output layer can relatively shorten the diffusion path of lithium ions. Therefore, the charging characteristics of the lithium ion secondary battery, in particular, the rapid charging characteristics can be improved. On the other hand, the reaction area of the positive electrode active material per unit volume in the positive electrode active material layer is relatively smaller in the positive electrode first active material layer which is the high capacity layer than in the positive electrode second active material layer which is the high input/output layer. Therefore, the cycle durability and the storage durability of lithium ions when the lithium ion secondary battery is repeatedly charged and discharged can be improved in the positive electrode first active material layer that is a high capacity layer. Here, the median diameter (D50) is a diameter of a particle when the integrated value is 50% in a particle size distribution measurement by a laser diffraction scattering type particle size distribution measurement method.

As the positive electrode active material layer, those satisfying Mf > Ms are preferable, and among them, those satisfying, for example, 5.6 µm ≤ Mf ≤ 18.6 µm and 3.0 µm ≤ Ms ≤ 8.0 µm are preferable.

As the positive electrode active material layer, the ratio of the weight of the conductive auxiliary agent to the total weight of the positive electrode second active material layer is preferably larger than the ratio of the weight of the conductive auxiliary agent to the total weight of the positive electrode first active material layer. This is because the diffusion path of lithium ions can be shortened and the electronic conductivity can be improved by disposing the positive electrode second active material layer having a large ratio of the weight of the conductive auxiliary agent on the separator side of the positive electrode active material layer, so that the resistance of the positive electrode active material layer can be reduced. This is because the cycle durability, the storage durability of the lithium ions, and the charge rate characteristics can be improved in the case where the lithium ion secondary battery is repeatedly charged and discharged.

As the positive electrode active material layer, the ratio of the weight of the conductive auxiliary agent to the total weight of the positive electrode second active material layer is preferably larger than the ratio of the weight of the conductive auxiliary agent to the total weight of the positive electrode first active material layer, but among them, for example, the ratio of the weight of the conductive auxiliary agent to the total weight of the positive electrode first active material layer is preferably 0.5 wt% or more and 2 wt% or less, and the ratio of the weight of the conductive auxiliary agent to the total weight of the positive electrode second active material layer is preferably 0.8 wt% or more and 5 wt% or less.

The thickness (for example, the second thickness T2 in Figure 4) of the positive electrode second active material layer on one side in the laminating direction (for example, the depth direction Y in Figure 4) may be, for example, 5 µm or more and 500 µm or less in average thickness, or may be, for example, 10 µm or more and 300 µm or less in average thickness.

### (4) Manufacturing Method

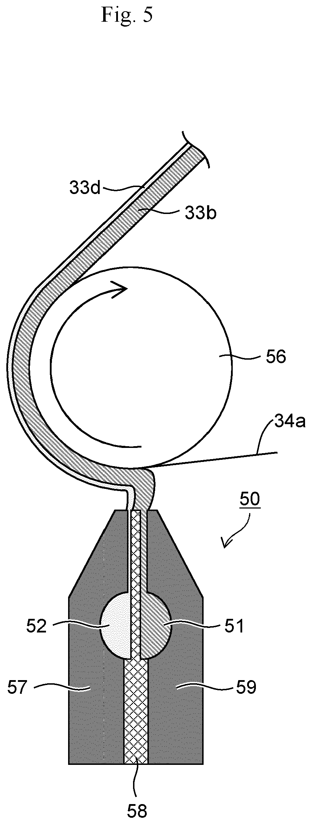

As a method for manufacturing the positive electrode for a lithium ion secondary battery according to the embodiment, a manufacturing method in which the positive electrode first active material layer and the positive electrode second active material layer of the positive electrode active material layer are simultaneously coated may be used. Hereinafter, an example of this manufacturing method will be described with reference to Figure 5.

In this manufacturing method, materials (for example, a positive electrode active material, a conductive auxiliary agent, a binder, or the like) included in the positive electrode first active material layer are prepared. These materials are mixed and the resulting mixture is dispersed in a solvent (e.g., N-methyl-2-pyrrolidone (NMP) and/or water) to obtain a positive electrode first slurry. Further, materials (for example, a positive electrode active material, a conductive auxiliary agent, a binder, or the like) included in the positive electrode second active material layer are prepared. These materials are mixed and the resulting mixture is dispersed in a solvent (e.g., N-methyl-2-pyrrolidone (NMP) and/or water) to obtain a positive electrode second slurry.

Next, for example, the positive electrode first slurry and the positive electrode second slurry are simultaneously applied onto the positive electrode current collector 34a using the die head 50 as shown in Figure 5. The die head 50 has an outlet block 57, a three-dimensional shim 58, and an inlet block 59. Inside the die head 50, a positive electrode second slurry manifold 52 and a positive electrode first slurry manifold 51 are provided. The positive electrode second slurry and the positive electrode first slurry are simultaneously discharged from the manifolds 52 and 51 toward the positive electrode current collector 34a conveyed along the back roller 56. As a result, the positive electrode second slurry layer 33d and the positive electrode first slurry layer 33b are formed. Next, the positive electrode first slurry layer 33b and the positive electrode second slurry layer 33d are dried by volatilizing the solvents contained in the positive electrode first slurry layer 33b and the positive electrode second slurry layer 33d in a drying oven etc. Thereby, a positive electrode first active material layer (not shown) and a positive electrode second active material layer (not shown) are formed on one surface of the positive electrode current collector 34a. Next, the positive electrode current collector 34a, the positive electrode first active material layer, and the positive electrode second active material layer are pressed. Specifically, the laminate including the positive electrode current collector 34a, the positive electrode first active material layer, and the positive electrode second active material layer is sandwiched between rolls heated to 60 to 120 °C and is pressed. Thereafter, the laminate is slit to a predetermined width. Thereby, a positive electrode is obtained.

Since the interface between the positive electrode first slurry layer 33b and the positive electrode second slurry layer 33d has an uneven configuration in the battery including the positive electrode manufactured by the above manufacturing process to which the simultaneous coating of the two or more layers is applied, effects are obtained that an adhesion of the positive electrode first slurry layer 33b and the positive electrode second slurry layer 33d is improved, and the reliability of the battery can be improved without peeling the two layers even if the volume change caused by charging and discharging occurs.

In addition, in the battery including the positive electrode manufactured by the above manufacturing method to which the two layers of simultaneous coating are applied, the interface of the positive electrode first active material layer (positive electrode first slurry layer 33b) on the positive electrode second active material layer (positive electrode second slurry layer 33d) side is not pressed by a rolling. For example, the interface of the positive electrode second active material layer (the positive electrode second slurry layer 33d) facing the positive electrode first active material layer (the positive electrode first slurry layer 33b) is pressed by the rolling. As a result, damage to the particles having a large particle diameter by the rolling can be suppressed in the positive electrode first active material layer including particles having a large particle diameter and particles having a smaller average particle diameter than particles having the large particle diameter as the positive electrode first active material.

Further, in the battery 1 including the positive electrode manufactured by the above manufacturing method to which the simultaneous coating of the two layers is applied, the surface opposite to the positive electrode first active material layer (the positive electrode first slurry layer 33b) of the positive electrode second active material layer (the positive electrode second slurry layer 33d) laminated on the positive electrode first active material layer (the positive electrode first slurry layer 33b) is rolled and pressed. This is preferable because it is possible to enhance the adhesion between the positive electrode first active material layer and the positive electrode second active material layer.

In particular, since the interface between the positive electrode second active material layer (the positive electrode second slurry layer 33d) and the positive electrode first active material layer (the positive electrode first slurry layer 33b) can be formed to have a larger unevenness than the surface of the positive electrode second active material layer (the positive electrode second slurry layer 33d) facing the roll during roll pressing, the adhesion is also good, and a stable ionic conductivity can be obtained.

### 2. Lithium Ion Secondary Battery

The lithium ion secondary battery according to the embodiment is a battery including a positive electrode, a negative electrode, and an electrolyte, in which the positive electrode is a positive electrode for a lithium ion secondary battery according to the embodiment. The lithium ion secondary battery is not limited to a battery that is mounted on an electric vehicle and supplies electric power to a driving motor of the electric vehicle. For example, the lithium ion secondary battery can be applied to a battery mounted on a portable electronic device such as a smartphone (registered trademark) or a battery mounted on a stationary power generation device.

The lithium ion secondary battery according to the embodiment is not particularly limited, but, for example, a lithium ion secondary battery including a positive electrode, a negative electrode, and a separator, as in an example according to the embodiment, in which an electrolyte is impregnated in the separator. The lithium ion secondary battery according to the embodiment preferably includes an electrolyte solution in which the electrolyte is dissolved.

Further, the lithium ion secondary battery according to the embodiment may be a battery including a solid electrolyte as an electrolyte, and may include a positive electrode, a negative electrode, and a solid electrolyte layer including a solid electrolyte, and further include a charge/discharge body in which the solid electrolyte layer is interposed between the positive electrode and the negative electrode.

The battery including such a solid electrolyte does not need to include an electrolyte solution, and thus can have a high safety. In addition, since the positive electrode second active material layer including the positive electrode second active material having a smaller average particle diameter and a larger specific surface area than the positive electrode first active material of the positive electrode first active material layer is disposed on the solid electrolyte layer side as compared with the positive electrode first active material layer, a good ion conduction is realized. It is preferable that the interface between the positive electrode second active material layer and the solid electrolyte layer has a larger unevenness in the thickness direction than the interface of the solid electrolyte layer on the opposite side to the positive electrode second active material layer. It is preferable for a lithium ion transfer because of its high adhesion.

Examples of solid electrolytes include sulphide-based solid electrolytes, such as Li₁₀GeP₂S₁₂, Li₆PS₅Cl and Li₂S-P₂S₅ glasses, Li₂S-SiS₂ glasses, Li₂S-P₂S₅-GeS₂ glasses, Li₂S-B₂S₃ glasses, oxide-based solid electrolytes, such as Li₇La₃Zr₂O₁₂, LiLaTiO₃, LiTi(PO₄)₃, LiGe(PO₄)₃ and complex hydride solid electrolytes, such as LiBH₄-LiI, LiBH₄-LiNH₂, and mixtures of two or more of these.

### 3. Other

A battery including the positive electrode according to another example of the embodiment may be a battery further including a positive electrode electronic insulation layer provided on the positive electrode and a negative electrode electronic insulation layer provided on the negative electrode, instead of the separator.

### (Configuration of Separatorless Battery Including Positive Electrode of Another Example According to Embodiment)

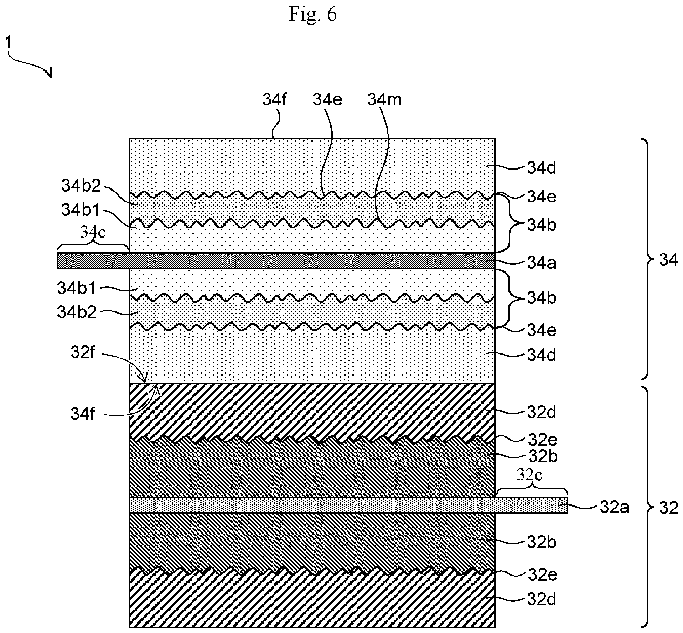

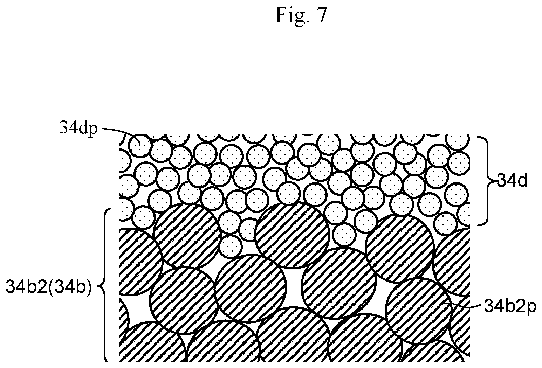

Hereinafter, a configuration of such a separatorless battery will be described with reference to Figures 6 and 7.

As shown in Figure 6, in a separatorless battery 1 (a lithium ion secondary battery) including a positive electrode 34 of another example according to embodiment, the positive electrode 34 includes a positive electrode current collector 34a and positive electrode active material layers 34b (positive electrode mixture layers) bonded to both surfaces of the positive electrode current collector 34a, in which the positive electrode active material layers 34b includes positive electrode first active material layers 34b1 bonded to both surfaces of the positive electrode current collector 34a and a positive electrode second active material layer 34b2 bonded to each of the positive electrode first active material layers 34b1. The positive electrode 34 further includes a positive electrode electronic insulation layer 34d bonded to each of the positive electrode second active material layers 34b2. The negative electrode 32 includes a negative electrode current collector 32a, a negative electrode active material layers 32b (negative electrode mixture layers) bonded to both surfaces of the negative electrode current collector 32a, and a negative electrode electronic insulation layer 32d bonded to each of the negative electrode active material layers 32b.

One end of the positive electrode current collector 34a is provided with a portion 34c that is not covered with either the positive electrode active material layer 34b or the positive electrode electronic insulation layer 34d (hereinafter referred to as a "positive electrode current collector exposed portion"). The positive electrode current collector exposed portion 34c is provided on the end face of the wound group (not shown) and in the vicinity thereof. The positive electrode current collector exposed portion 34c faces and is electrically connected to a positive connection end (not shown) of a positive electrode current collector plate (not shown). Similarly, one end of the negative electrode current collector 32a is provided with a portion 32c (hereinafter referred to as "negative electrode current collector exposed portion") that is not covered with either the negative electrode active material layer 32b or the negative electrode electronic insulation layer 32d. The negative electrode current collector exposed portion 32c is provided on the end face of the wound group and in the vicinity thereof. The negative electrode current collector exposed portion 32c faces and is electrically connected to a negative connection end (not shown) of a negative electrode current collector plate (not shown).

The positive electrode electronic insulation layer 34d and the negative electrode electronic insulation layer 32d have a function of preventing a short circuit between the positive electrode active material layer 34b and the negative electrode active material layer 32b, and a function of conducting ions between the positive electrode active material layer 34b and the negative electrode active material layer 32b. The positive electrode electronic insulation layer 34d and the negative electrode electronic insulation layer 32d may be a porous layer made of a material having an electrically insulating (i.e., electronically insulating and ionically insulating). The porous layer can retain the electrolyte in the pores thereof, and can conduct ions between the positive electrode active material layer 34b and the negative electrode active material layer 32b through the electrolyte.

The positive electrode electronic insulation layer 34d and the negative electrode electronic insulation layer 32d that is porous may also have a function of buffering expansion and contraction of the positive electrode active material layer 34b and the negative electrode active material layer 32b caused by charging and discharging of the lithium ion secondary battery 100. The expansion and contraction of the negative electrode active material layer 32b with the charging and discharging of the battery 1 is generally larger than the expansion and contraction of the positive electrode active material layer 34b. Therefore, the negative electrode electronic insulation layer 32d may have an average pore diameter larger than the average pore diameter of the positive electrode electronic insulation layer 34d so that the expansion and contraction of the larger negative electrode active material layer 32b can be buffered. In the present application, the average pore diameter of the positive electrode electronic insulation layer 34d and the negative electrode electronic insulation layer 32d means an average volumetric pore diameter measured by a mercury intrusion porosimetry.

The sum of Na and Fe contents of the positive electrode electronic insulation layer 34d and the negative electrode electronic insulation layer 32d may be 300 ppm or less based on the weights of the positive electrode electronic insulation layer 34d and the negative electrode electronic insulation layer 32d. The amounts of the respective elements contained in the positive electrode electronic insulation layer 34d and the negative electrode electronic insulation layer 32d can be measured by an ICP (Inductive Coupled Plasma) method.

The positive electrode electronic insulation layer 34d may include positive electrode electronic insulation particles, and the negative electrode electronic insulation layer 32d may include negative electrode electronic insulation particles. Hereinafter, the positive electrode electronic insulation particles and the negative electrode electronic insulation particles are collectively referred to as electronic insulation particles as appropriate. The electronic insulation particles may be electrical insulation particles. Examples of electrical insulation particles include ceramic particles. The ceramic particles may contain at least one selected from the group consisting of alumina (Al₂O₃), boehmite (Al₂O₃ hydrate), magnesia (MgO), zirconia (ZrO₂), titania (TiO₂), iron oxide, silica (SiO₂), and barium titanate (BaTiO₂), and preferably contain at least one selected from the group consisting of alumina, boehmite, magnesia, zirconia, and titania. The electronic insulation particles may have an average particle diameter in the range of 0.7 to 1.1 µm. The average particle diameter of the electronic insulation particles can be obtained by calculating the arithmetic average of the projected area circle equivalent diameters of the 100 or more electronic insulation particles selected at random based on the microscopic observation images of the positive electrode electronic insulation layer 34d and the negative electrode electronic insulation layer 32d. The electronic insulation particles may contain at least one of Na of 100 to 200 ppm, Fe of 50 to 100 ppm or Ca of 50 to 100 ppm, based on the weight of the electronic insulation particles.

The positive electrode electronic insulation layer 34d and the negative electrode electronic insulation layer 32d may further include a binder. The binder may be dispersed or dissolved in an aqueous solvent or a nonaqueous solvent (e.g., N-methyl-2-pyrrolidone (NMP)), and may contain, for example, at least one selected from the group consisting of polyvinylidene fluoride (PVDF), polytetrafluoroethylene (PTFE), polyacrylic acid (PAA), and carboxymethylcellulose (CMC).

The positive electrode electronic insulation layer 34d and the negative electrode electronic insulation layer 32d may further include a dispersant. The dispersant may contain at least one selected from the group consisting of a carboxylic acid compound and a phosphoric acid compound.

An interface 34e between the positive electrode electronic insulation layer 34d and the positive electrode active material layer 34b (the positive electrode second active material layer 34b2) has an uneven configuration, and the uneven height thereof is 2 µm or more, preferably 2 to 4 µm. The interface 32e between the negative electrode electronic insulation layer 32d and the negative electrode active material layer 32b has an uneven configuration, and the uneven height thereof is 2 µm or more, preferably 2 to 4 µm. The adhesion between the positive electrode electronic insulation layer 34d and the positive electrode active material layer 34b and the adhesion between the negative electrode electronic insulation layer 32b and the negative electrode active material layer 32d and between the negative electrode electronic insulation layer 32d and the negative electrode active material layer 32b can be improved because the uneven height of the interface 32e between the positive electrode electronic insulation layer 34d and the positive electrode active material layer 34b is 2 µm or more. Accordingly, it is possible to prevent or reduce the separation of the positive electrode electronic insulation layer 34d and the negative electrode electronic insulation layer 32d from the positive electrode active material layer 34b and the negative electrode active material layer 32b, respectively, and to improve the reliability of the lithium ion secondary battery 100.

The uneven height of the interface 34b between the positive electrode active material layer 34b2 and the positive electrode electronic insulation layer 34d can be controlled by, for example, the particle diameters of the positive electrode second active material particles (positive electrode second active material) included in the positive electrode second active material layer 34b2 and the positive electrode electronic insulation particles included in the positive electrode electronic insulation layer 34d. As shown in Figure 7, when the average particle diameter of the positive electrode second active material particles 34b2p (positive electrode second active material) included in the positive electrode second active material layer 34b2 is larger than the average particle diameter of the positive electrode electronic insulation particles 34dp included in the positive electrode electronic insulation layer 34d, the positive electrode electronic insulation particles 34dp enters the gap between the positive electrode second active material particles 34b2p, and the interface 34e between the positive electrode second active material layer 34b2 and the positive electrode electronic insulation layer 34d becomes uneven. For example, by using a spherical positive electrode second active material particles 34b2p having an average particle diameter in the range of 4.5 to 5.5 µm and the positive electrode electronic insulation particles 34dp having an average particle diameter in the range of 0.7 to 1.1 µm, the uneven height of the interface 34e between the positive electrode active material layer 34b (positive electrode second active material layer 34b2) and the positive electrode electronic insulation layer 34d can be set to 2 µm or more, preferably 2 to 4 µm.

Similarly, the uneven height of the interface 32b between the negative electrode active material layer and the negative electrode electronic insulation layer 32d can be controlled by the particle diameters of the negative electrode active material particles (negative electrode active material) included in the negative electrode active material layer 32b and the negative electrode electronic insulation particles included in the negative electrode electronic insulation layer 32d. For example, by using scaly negative electrode active material particles having an average particle diameter in the range of 9 to 11 µm and negative electrode electronic insulation particles having an average particle diameter in the range of 0.7 to 1.1 µm, the uneven height of the interface 32e between the negative electrode active material layer 32b and the negative electrode electronic insulation layer 32d can be set to 2 µm or more, preferably 2 to 4 µm.

In the present application, the interface 34e between the positive electrode electronic insulation layer 34d and the positive electrode active material layer 34b (the positive electrode second active material layer 34b2) and the uneven height of the interface 32e between the negative electrode active material layer 32b and the negative electrode electronic insulation layer 32d are measured as follows. A scanning electron microscopy (SEM) obtains cross-sectional SEM images of any three positions of the positive electrode 34 or the negative electrode 32. And distances from any ten or more points on the interface 34e, 32e to a predetermined reference plane are measured (for example, distances from any ten or more points on the interface 34e, 32e to the surface 34f of the positive electrode electronic insulation layer 34d, distances from 32f of the negative electrode electronic insulation layer 32d, that is, thicknesses of the positive electrode electronic insulation layer 34d and thicknesses of the negative electrode electronic insulation layer 32d at any ten or more points) in each of the cross-sectional SEM images. A standard deviation of the obtained distance values is defined as the uneven height of the interface 34e, 32e. In addition, the surface 34f of the positive electrode electronic insulation layer 34d and the surface 32f of the negative electrode electronic insulation layer 32d are surfaces facing each other, and may be sufficiently flat as compared with the interface 34e, 32e. For example, the uneven height of the front surface 34f, 32f of the positive electrode electronic insulation layer 34d and the negative electrode electronic insulation layer 32d may be 1/10 or less of the uneven height of the interface 34e, 32e.

The phrase "the interface 34d between the positive electrode electronic insulation layer 34b and the positive electrode active material layer 34e has an uneven configuration" may be replaced with "a positive electrode mixed layer including the positive electrode active material and the electronic insulation material between the positive electrode electronic insulation layer 34d and the positive electrode active material layer 34b." Similarly, the phrase "the interface 32d between the negative electrode electronic insulation layer 32b and the negative electrode active material layer 32e has an uneven configuration" can be referred to as "a negative electrode mixed layer including the negative electrode active material and the electronic insulation material between the negative electrode electronic insulation layer 32d and the negative electrode active material layer 32b." The thickness of the positive electrode mixed layer is 2 µm or more, preferably in the range of 2 to 4 µm. The thickness of the negative electrode mixed layer is 2 µm or more, preferably in the range of 2 to 4 µm. The thickness of the positive electrode mixed layer and the negative electrode mixed layer can be measured in the same manner as the uneven height of the interface 34e, 32e between the positive electrode electronic insulation layer 34d and the negative electrode electronic insulation layer 32d and the positive electrode active material layer 34b and the negative electrode active material layer 32b described above.

The positive electrode electronic insulation layer 34d and the negative electrode electronic insulation layer 32d may be contacted with each other. Preferably, the positive electrode electronic insulation layer 34d and the negative electrode electronic insulation layer 32d may be contacted with each other without being fixed. Since the positive electrode electronic insulation layer 34d and the negative electrode electronic insulation layer 32d are not fixed to each other, stresses caused by expansion and contraction of the negative electrode active material layer 32b and the positive electrode active material layer 34b due to charge and discharge of the lithium ion secondary battery 100 can be relaxed, and dendrites that can cause a short circuit between the positive electrode active material layer 34b and the negative electrode active material layer 32b can be prevented or reduced from growing through the positive electrode electronic insulation layer 34d and the negative electrode electronic insulation layer 32d.

The peel strength of the positive electrode electronic insulation layer 34d with respect to the positive electrode active material layer 34b and the peel strength of the negative electrode electronic insulation layer 32d with respect to the negative electrode active material layer 32b may be higher than the peel strength of the positive electrode electronic insulation layer 34d with respect to the negative electrode electronic insulation layer 32d. The peel strength can be measured, for example, by a 180° tape peel test according to JIS C 0806-3 1999.

The uneven height of the interface 34b (positive electrode second active material layer 34b2) between the positive electrode active material layer 34d and the positive electrode electronic insulation layer 34d can be controlled by the types and viscosities etc. of the solvents of the positive electrode electronic insulation material slurry used for forming by the coating the positive electrode active material layer 34b (positive electrode second active material layer 34b2) and the positive electrode electronic insulation layer 34e in addition to the particle diameters of the positive electrode active material particles and the positive electrode electronic insulation particles described above. Similarly, the uneven height of the interface 32b between the negative electrode active material layer and the negative electrode electronic insulation layer 32d can also be controlled by the types and viscosities etc. of the solvents of the negative electrode electronic insulation material slurry used for the formation by the coating of the negative electrode active material layer 32b and the negative electrode electronic insulation layer 32d.

The average pore diameters of the positive electrode electronic insulation layer 34d and the negative electrode electronic insulation layer 32d can be controlled by the particle diameter of the electronic insulation particles, the press pressure in the press processing etc. Specifically, the higher the pressing pressure, the smaller the average pore diameter, and the smaller the particle diameter of the electronic insulation particles, the smaller the average pore diameter.

In the separatorless battery 1 including the positive electrode 34 of the other example described above, since the strength of the electronic insulation layer (the positive electrode electronic insulation layer 34d and the negative electrode electronic insulation layer 32d) is higher than that of the separator, the safety of the battery is improved. In addition, the battery 1 of the other example as described above can contribute to the provision of a battery having a high energy density and a long life by mounting a positive electrode manufactured by a manufacturing method to which the above-described simultaneous coating of two layers is applied or a positive electrode manufactured by a manufacturing method to which the simultaneous coating of three layers described later is applied.

### (Modified Example)

Further, in a modified example of the separatorless battery 1 (lithium ion secondary battery) including the positive electrode 34 of the other example described above, each of the positive electrode electronic insulation layer 34d and the negative electrode electronic insulation layer 32d is a layer including a solid electrolyte (that is, an electronically insulating and ionically conductive material). The battery (lithium ion secondary battery) of this modified example does not need to include an electrolyte solution, and thus can have high safety. In this modified example, the electronic insulation particles included in the positive electrode electronic insulation layer 34d and the negative electrode electronic insulation layer 32d may be solid electrolyte particles. Since the solid electrolyte can be satisfactorily formed by press molding, in this case, it is not essential that the positive electrode electronic insulation layer 34d and the negative electrode electronic insulation layer 32d contain a binder and a dispersant.

Further, at least one of the positive electrode first active material layer 34b1 and the positive electrode second active material layer 34b2 included in the positive electrode active material layer 34b may further contain a solid electrolyte in addition to the active material and an optional binder, a conductive auxiliary agent, and a dispersant. Accordingly, the ionic conductivity of at least one of the positive electrode first active material layer 34b1 and the positive electrode second active material layer 34b2 can be improved.

The negative electrode active material layer 32b may further contain a solid electrolyte in addition to the electrode active material and an optional binder, a conductive auxiliary agent, and a dispersant. Accordingly, the ionic conductivity of the negative electrode active material layers 32b can be improved.

In the battery 1 of the modified example described above, since it is not necessary to include an electrolyte solution and the strength of the electronic insulation layer (the positive electrode electronic insulation layer 34d and the negative electrode electronic insulation layer 32d) is higher than that of the separator, it is possible to realize a high safety. Further, the battery 1 of such a modified example can contribute to the provision of a battery having a high energy density and a long life by mounting a positive electrode manufactured by a manufacturing method to which the above-described simultaneous coating of two layers is applied, or a positive electrode manufactured by a manufacturing method to which the simultaneous coating of three layers described later is applied.

### (Method for Manufacturing Separatorless Battery Including Positive Electrode of Another Example According to Embodiment)

Such a separatorless battery (lithium ion secondary battery) can be manufactured using a technique known in the technical field of the present invention except for the manufacturing method of the positive electrode of another example according to the embodiment.

The positive electrode 34 of another example according to the embodiment can be manufactured by simultaneously coating the positive electrode first active material layer 34b1, the positive electrode second active material layer 34b2, and the positive electrode electronic insulation layer 34d of the positive electrode active material layer 34b as follows, for example.

First, materials (for example, a positive electrode active material, a conductive auxiliary agent, a binder, or the like) included in the positive electrode first active material layer 34b1 are prepared. These materials are mixed and the resulting mixture is dispersed in a solvent (e.g., N-methyl-2-pyrrolidone (NMP) and/or water) to obtain a positive electrode first slurry. In addition, materials (for example, a positive electrode active material, a conductive auxiliary agent, a binder, or the like) included in the positive electrode second active material layer 34b2 are prepared. These materials are mixed and the resulting mixture is dispersed in a solvent (e.g., N-methyl-2-pyrrolidone (NMP) and/or water) to obtain a positive electrode second slurry. Further, materials (for example, positive electrode electronic insulation particles, a binder, a dispersant etc.) included in the positive electrode electronic insulation layer 34d are prepared. These materials are mixed and the resulting mixture is dispersed in a solvent (e.g., N-methyl-2-pyrrolidone (NMP) and/or water) to obtain a positive electrode electronic insulator slurry.

Next, the positive electrode first slurry, the positive electrode second slurry, and the positive electrode electronic insulation material slurry are simultaneously coated on the positive electrode current collector. As a result, the positive electrode second slurry layer, the positive electrode first slurry layer, and the positive electrode electronic insulation material slurry layer are laminated in this order. Next, the solvent contained in the positive electrode second slurry layer, the positive electrode first slurry layer, and the positive electrode electronic insulation material slurry layer is volatilized by a drying furnace or the like, and the positive electrode second slurry layer, the positive electrode first slurry layer, and the positive electrode electronic insulation material slurry layer are dried. As a result, the positive electrode first active material layer 34b1, the positive electrode second active material layer 34b2, and the positive electrode electronic insulation layer 34d are laminated in this order on one surface of the positive electrode current collector 34a. Next, the positive electrode current collector 34a, the positive electrode first active material layer 34b1, the positive electrode second active material layer 34b2, and the positive electrode electronic insulation layer 34d are pressed. Specifically, the laminate in which the positive electrode current collector 34a, the positive electrode first active material layer 34b1, the positive electrode second active material layer 34b2, and the positive electrode electronic insulation layer 34d are laminated in this order is sandwiched between rolls heated to 60 to 120 °C and subjected to pressure. Thereafter, the laminate is slit to a predetermined width. Thereby, a positive electrode is obtained.

In the battery 1 including the positive electrode 34 manufactured by the manufacturing method to which the simultaneous coating of three or more layers is applied, as the structure of the positive electrode 34 is shown in Figure 6, since it is firmly adhered because it has unevenness at the interface of each layer, high safety and reliability can be obtained. Further, when this manufacturing method is applied to the lithium ion secondary battery of the above-described modified example, it is not necessary to include an electrolytic solution, and it is possible to obtain higher safety and reliability.

Further, in the battery 1 including the positive electrode 34 manufactured by the manufacturing method to which the above three layers of the simultaneous coating are applied, an interface 34m of the positive electrode first active material layer 34b1 (positive electrode first slurry layer) on the positive electrode second active material layer 34b2 (positive electrode second slurry layer) side is not pressed by rolling. For example, a surface 34f of the positive electrode electronic insulation layer 34d opposite to the positive electrode second active material layer 34b2 is pressed by the rolling. As a result, in the positive electrode active material first active material layer 34b1 including the particles having the large particle diameter and the particles having a smaller average particle diameter than the particles having the large particle diameter as the positive electrode first active material, it is possible to prevent the particles having the large particle diameter from being damaged by the rolling.

Further, in the battery 1 including the positive electrode 34 manufactured by the manufacturing method to which the above three layers of the simultaneous coating are applied, the surface 34f of the positive electrode electronic insulation layer 34d opposite to the positive electrode second active material layer 34b2 is rolled and pressed, the positive electrode electronic insulation layer 34d being a coating layer laminated on the positive electrode second active material layer 34b2. Thus, it is preferable to improve the adhesion of the positive electrode first active material layer 34b1, the positive electrode second active material layer 34b2, and the positive electrode electronic insulation layer 34d (the coating layer).

In particular, the interface 34e between the positive electrode electronic insulation layer 34d and the positive electrode second active material layer 34b2 and the interface 34m between the positive electrode second active material layer 34b2 and the positive electrode first active material layer 34b1 can be formed to have a larger unevenness than the surface 34f of the positive electrode electronic insulation layer 34d facing the roll during roll pressing, so that the adhesion is also good and the stable ionic conductivity can be obtained. Among them, for example, it is preferable that the difference between the unevenness in the interface 34e and the unevenness in the interface 34m is smaller than the difference between the unevenness in the surface 34f of the positive electrode electronic insulation layer 34d and the unevenness in the interface 34m, the interface 34e being between the positive electrode electronic insulation layer 34d and the positive electrode second active material layer 34b2, and the interface 34m being between the positive electrode second active material layer 34b2 and the positive electrode first active material layer 34b1.

### [Examples]

Hereinafter, the present invention will be described in detail by reference examples, but the present invention is not limited to these reference examples.

### [Reference Example 1]

A lithium-containing composite oxide represented by the following general composition formula Li_{1.0}Ni_{Y}Co_{Z}Mn_{(1-Y-Z)}O₂ (Y=0.33 and Z=0.34) was prepared as the positive electrode active material. The values of Y and Z in the formulae for the positive electrode active material were determined by the ICP. Acetylene black was prepared as a conductive auxiliary agent, and polyvinylidene fluoride (PVdF) was prepared as a binder.

The positive electrode active material, the conductive auxiliary agent, and the binder were mixed in a weight ratio of 90 : 5 : 5. N-Methyl-2-pyrrolidone (NMP) was added to the resulting mixture to adjust the viscosity to obtain a positive electrode slurry.

An aluminum foil having a thickness of 15 µm was prepared as a positive electrode current collector. The positive electrode slurry was applied to both surfaces of the positive electrode current collector by a slot die coating method to form a positive electrode slurry layer. Then, the positive electrode slurry layer was dried and pressed. Thus, a positive electrode (a positive electrode for a lithium ion secondary battery) in which the positive electrode active material layer was formed on both surfaces of the positive electrode current collector was obtained.

A natural graphite coated with an amorphous carbon was prepared as the negative electrode active material. Further, styrene butadiene rubber (SBR) was prepared as a binder, and carboxymethyl cellulose (CMC) was prepared as a dispersant.

The negative electrode active material, the binder, and the dispersant were mixed in a weight ratio of 98 : 1 : 1. An ion exchanged water was added to the obtained mixture to adjust the viscosity, and a negative electrode slurry was obtained.

A copper foil having a thickness of 10 µm was prepared as the negative electrode current collector. The negative electrode slurry was applied to both surfaces of the negative electrode current collector by the slot die coating method to form a negative electrode slurry layer. Then, the negative electrode slurry layer was dried and pressed. Accordingly, a negative electrode (a negative electrode for a lithium ion secondary battery) in which the negative electrode active material layer was formed on both surfaces of the negative electrode current collector was obtained.

One separator, a negative electrode, another separator, and a positive electrode were laminated in this order and wound. Thereby, a wound group was produced. Ethylene carbonate (EC) and dimethyl carbonate (DMC) were mixed in a volume ratio of 1 : 2, and LiPF₆ was dissolved in the obtained mixed liquid. As a result, a LiPF₆ solution of 1.0 mol/L was obtained as a nonaqueous electrolyte solution. A lithium ion secondary battery was fabricated using the wound group and the nonaqueous electrolyte solution.

### [Reference Example 2]

A lithium ion secondary battery was prepared in the same manner as in Reference Example 1 except that a positive electrode (a positive electrode for a lithium ion secondary battery) was obtained by preparing and using a lithium-containing composite oxide represented by the general composition formula Li_{1.0}Ni_{Q}Co_{R}Mn_{(1-Q-R)}O₂ (Q=0.8 and R=0.1) as a positive electrode active material. The values of Q and R in the formulas for the positive electrode active materials were determined by the ICP.

### [Evaluation]

Life characteristics of the lithium ion secondary batteries of Reference Examples 1 and 2 were evaluated. Specifically, for the lithium ion secondary batteries of Reference Examples 1 and 2, after measuring the initial battery capacity and a direct current resistance (DCR), a high temperature storage was performed, and the battery capacity and the direct current resistance (DCR) after the high temperature storage were measured. From these measurements, a capacity retention rate and a DCR increase rate before and after the high temperature storage of the batteries were obtained. Hereinafter, it will be described in detail.

### (1) Measurement of Initial Battery Capacity

The lithium ion secondary battery was charged with a constant current of 0.2CA until the battery voltage became 4.2 V, and subsequently charged with a constant voltage of 4.2 V. Charging was performed for a total of 2.5 hours. After 30 minutes of pause, the lithium ion secondary battery was discharged at a constant current of 0.1CA until the battery voltage became 2.5 V, and the discharge capacity was determined. This discharge capacity was taken as the initial battery capacity.

### (2) Measuring Initial DCR

The lithium ion secondary battery was charged until the battery voltage became 4.2 V. Thereafter, 5 % of the battery capacity was discharged. After two hours of pause, an open circuit voltage (OCV) of the lithium ion secondary battery was measured. In the same manner, the discharging of 5 % of the battery capacity and the measuring of the OCV were repeated to determine the relation between a charge rate (SOC) and the OCV.

Based on the relation between the SOC and the OCV, the lithium ion secondary battery was charged in a constant current-constant voltage (CC-CV) method from SOC 0% to SOC 50%. The charging current during the constant current charging was 0.2CA. Thereafter, the lithium ion secondary battery was discharged at a constant current of 1CA for 10 seconds, and a voltage-drop value due to the discharge was measured. Further, similar constant current discharges were performed with discharge currents 2CA and 3CA. The discharging current is plotted on the horizontal axis and the voltage-drop value is plotted on the vertical axis, and a slope of the graph is taken as an initial DCR.

### (3) High Temperature Storage

Based on the relation between the SOC and the OCV, lithium ion secondary batteries were charged in a constant current-constant voltage (CC-CV) manner from SOC 0% to SOC 100%. Then, the lithium ion secondary battery was stored in a thermostatic chamber at 80 °C for 30 days. The lithium ion secondary battery was taken out from the thermostatic chamber at 80 °C and discharged at a constant current of 1CA until the battery voltage became 2.8 V.

### (4) Measurement of Battery Capacity after High Temperature Storage

The measurement of the battery capacity of the lithium ion secondary battery after the high temperature storage was performed in the same manner as the measurement of the initial battery capacity.

### (5) Measuring DCR after High Temperature Storage

The measurement of the DCR of the lithium ion secondary batteries after the high temperature storage was performed in the same manner as the measurement of the initial DCR.

### (6) Capacity Retention Rate and DCR Increase Rate

From the above measurement results, the capacity retention ratio was obtained by dividing the battery capacity after the high temperature storage by the initial battery capacity. And the DCR increase rate was obtained by dividing DCR after the high temperature storage by the initial DCR. The capacity retention rate and the DCR increase rate of the lithium ion secondary batteries of the respective Reference Examples are shown in Tables 1 below.

**[Table 1]**

| | Capacity Retention Rate [%] | DCR Increase Rate [%] |
|---|---|---|
| Reference Example 1 | 90 | 127 |
| Reference Example 2 | 78 | 161 |

As shown in Table 1, in the lithium ion secondary battery of Reference Example 1 in which the molar fraction of Ni in the positive electrode active material was smaller, the capacity retention rate was higher and the DCR increase rate was lower as compared with the lithium ion secondary battery of Reference Example 2 in which the molar fraction of Ni in the positive electrode active material was larger. One of the causes for the increase in the DCR is thought to be the formation of an inert layer. In the positive electrode of the lithium ion secondary battery, the inert layer is generated on the separator side (the side far from the current collector). Therefore, by making the electrode multi-layered and making the Ni content of the layer on the separator side (the side farther from the current collector) lower than that of the layer on the side closer to the current collector, it is possible to suppress the formation of the inert layer in the positive electrode, thereby providing the battery with high energy density and long life by minimizing the inhibition of ion conduction while still containing the desired Ni throughout the electrode.

The present invention includes the following aspects.

### [Item 1]

The lithium ion secondary battery including:
a positive electrode including a positive electrode current collector, a positive electrode mixture layer provided on the positive electrode current collector, and a positive electrode electronic insulation layer provided on the positive electrode mixture layer; and
a negative electrode including a negative electrode current collector, a negative electrode mixture layer provided on the negative electrode current collector, and a negative electrode including a negative electrode electronic insulation layer provided on the negative electrode mixture layer,
in which an uneven height of an interface between the positive electrode mixture layer and the positive electrode electronic insulation layer is 2 µm or more, and
in which the uneven height of an interface between the negative electrode mixture layer and the negative electrode electronic insulation layer of 2 µm or more.

### [Item 2]

The lithium ion secondary battery according to Item 1, in which the positive electrode electronic insulation layer and the negative electrode electronic insulation layer are in contact with each other.

### [Item 3]

The lithium ion secondary battery according to Item 1 or 2, in which the positive electrode electronic insulation layer and the negative electrode electronic insulation layer are in contact with each other without being fixed.

### Reference Signs List

- 1: battery (lithium ion secondary battery),
- 100: charge/discharge body,
- 110: positive electrode (positive electrode for lithium ion secondary battery),
- 111: positive electrode current collector,
- 111b: positive electrode tab,
- 111c: side edge,
- 112: positive electrode active material layer,
- 113: positive electrode first active material layer,
- 114: positive electrode second active material layer,
- 120: negative electrode,
- 121: negative electrode current collector,
- 121a: current collector,
- 121b: negative electrode tab,
- 121c: side edge,
- 122: negative electrode active material layer,
- 130: separator,
- 200: container,
- 201: case,
- 202: lid,
- 300: external terminal,
- 301: positive electrode terminal,
- 302: negative electrode terminal,
- X: lateral width direction of the battery 1,
- Y: depth direction of the battery 1,
- Z: height direction of the battery 1.

All publications, patents, and patent applications cited herein are hereby incorporated by reference in their entirety.

## Claims

1. A positive electrode for a lithium ion secondary battery comprising:
a positive electrode current collector; and
a positive electrode active material layer laminated on the positive electrode current collector,
wherein the positive electrode active material layer includes a positive electrode first active material layer laminated on the positive electrode current collector, and a positive electrode second active material layer laminated on the positive electrode first active material layer,
the positive electrode first active material layer includes a positive electrode first active material containing a lithium-containing composite oxide containing Li and Ni as a main component,
the positive electrode second active material layer includes a positive electrode second active material containing a lithium-containing composite oxide containing Li and Ni as a main component, and
a molar fraction of Ni in the positive electrode second active material of the positive electrode second active material layer is smaller than the molar fraction of Ni in the positive electrode first active material of the positive electrode first active material layer.

2. The positive electrode for the lithium ion secondary battery according to claim 1,
wherein the lithium-containing composite oxide constituting the positive electrode first active material of the positive electrode first active material layer further contains Co, and the lithium-containing composite oxide constituting the positive electrode second active material of the positive electrode second active material layer further contains Co,
wherein a molar fraction of Co in the positive electrode second active material is larger than a molar fraction of Co in the positive electrode first active material.

3. The positive electrode for the lithium ion secondary battery according to claim 1 or 2,
wherein an average particle diameter of the positive electrode second active material of the positive electrode second active material layer is smaller than the average particle diameter of the positive electrode first active material of the positive electrode first active material layer.

4. The positive electrode for the lithium ion secondary battery according to claim 1 or 2,
wherein the positive electrode first active material layer and the positive electrode second active material layer further include a conductive auxiliary agent, and
a ratio of a weight of the conductive auxiliary agent to a total weight of the positive electrode second active material layer is larger than the ratio of the weight of the conductive auxiliary agent to the total weight of the positive electrode first active material layer.

5. The positive electrode for the lithium ion secondary battery according to claim 1 or 2,
wherein the positive electrode first active material layer includes solid particles having a large particle diameter and solid particles having a small particle diameter smaller than that of the solid particles having the large particle diameter as the positive electrode first active material, and
the positive electrode second active material layer includes hollow particles as the positive electrode second active material.

6. A lithium ion secondary battery comprising:
a positive electrode;
a negative electrode; and
an electrolyte,
wherein the positive electrode is the positive electrode for the lithium ion secondary battery according to claim 1 or 2.
